(19) Europäisches Patentamt / European Patent Office / Office européen des brevets

(11) **EP 4 470 374 A1**

(12) **EUROPEAN PATENT APPLICATION**
published in accordance with Art. 153(4) EPC

(43) Date of publication:
**04.12.2024 Bulletin 2024/49**

(21) Application number: **22924352.2**

(22) Date of filing: **28.11.2022**

(51) International Patent Classification (IPC):
*A01N 25/12* (2006.01)    *A01N 25/08* (2006.01)
*A01N 43/56* (2006.01)    *A01N 47/36* (2006.01)
*A01N 43/90* (2006.01)    *A01N 41/02* (2006.01)
*A01N 25/30* (2006.01)

(52) Cooperative Patent Classification (CPC):
A01N 25/08; A01N 25/12; A01N 25/30;
A01N 41/02; A01N 43/56; A01N 43/90; A01N 47/36

(86) International application number:
**PCT/KR2022/018987**

(87) International publication number:
**WO 2023/146099 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.01.2022  KR 20220012424
15.11.2022  KR 20220152929**

(71) Applicant: **Neoinnotech Corp.
Chungcheongnam-do 31460 (KR)**

(72) Inventor: **KIM, Ji Yeon
Cheonan-si, Chungcheongnam-do 31156 (KR)**

(74) Representative: **Dehns
10 Old Bailey
London EC4M 7NG (GB)**

(54) **IMMEDIATE-RELEASE PESTICIDE FORMULATION**

(57) The present invention relates to a tablet for a pesticide comprising: a pesticide active ingredient; an extending agent having a water solubility of 10 to 250 g/100 ml; and a disintegrating agent. The present invention may provide a tablet for a pesticide which can: minimize the risk of a user's exposure to the pesticide due to scattering and generation of dust; eliminate the inconvenience of having to measure the product for every use, and prevent misapplication and overapplication of the pesticide due to difficulties in measuring the pesticide, since the weight of each tablet is quantified; and resolve the hassle of collecting a pesticide packaging material after use.

## Description

Technical Field

The present invention relates to a dilution-type pesticide tablet that maximizes the safety of pesticide users, convenience of use, and profits for pesticide producers.

Background Art

Representative methods of diluting and spraying pesticides include spraying with a distributed sprayer in which 20 liters of water is charged in a container and sprayed while it is carried on the user's back, a high-pressure sprayer in which a pesticide is diluted in 500 liters of water, which is sprayed using high-pressure power, and a passenger SS (speed spray) sprayer and a drone used in orchards or the like. In the above sprayers, water is charged to a container with a certain volume (20 liters to 2,000 liters), and a pesticide is diluted therein according to the dilution ratio and then used. However, solid pesticides such as wettable powders and granular wettable powders may cause safety problems for workers due to scattering and dust problems.

Currently, pesticide tablets used around the world are effervescent tablets that are prepared by combining an organic acid, a carbonate, and other ingredients, and are a formulation that generates carbon dioxide gas when added to water, causing the tablets to collapse and the pesticide ingredients to spread. Conventional effervescent tablets require a rather long time, about 5 minutes to 15 minutes, to be completely dissolved or dispersed in water.

In addition, effervescent tablets have a problem in that when they come in contact with moisture in the air during storage, they release carbon dioxide gas and lose product performance. For example, even though the tablets are packaged in a water-soluble film, the performance of the products may deteriorate during storage due to moisture penetrating into the packaging. Products that have reached their expiration date after a certain period of time cannot be reprocessed and must be discarded in their entirety. To solve this problem, methods are used to suppress contact with moisture in the air, such as coating the organic acid and carbonate that exert a foaming function with a binder; however, the manufacturing process is complicated and leads to an increase in manufacturing costs.

Accordingly, a specific method is required to significantly shorten the disintegration and/or dispersion time of effervescent tablets, maintain tableting workability and storage stability, as well as ensure excellent powder degree and suspensionability in a container for pesticide spraying.

[Prior Art Document]

[Patent Document]

(Patent Document 1) Korean Patent No. 10-0994183

## Disclosure of Invention

### Technical Problem

An object of the present invention is to provide a pesticide tablet that can minimize the risk of user's exposure to pesticides due to scattering and dust generation of conventional solid pesticide formulations, involve no inconvenience of having to measure the product each time since the weight of each tablet is quantified, eliminate the causes of pesticide misuse and abuse due to the difficulty of measuring pesticides, and eliminate the hassle of collecting used packaging materials of pesticides.

### Solution to Problem

In order to accomplish the above object, an aspect of the present invention provides a pesticide tablet, which comprises a pesticide active ingredient; an extender with a water solubility of 10 to 250 g/100 ml; and a disintegrant.

Another aspect of the present invention provides a process for preparing a pesticide tablet, which comprises mixing a pesticide active ingredient and a first extender and then pulverizing them to prepare a first mixture; mixing the first mixture, a second extender, and a disintegrant to prepare a second mixture; and tableting the second mixture into tablets, wherein each of the first extender and the second extender has a water solubility of 10 to 250 g/100 ml.

**Advantageous Effects of Invention**

The pesticide tablet according to the present invention is commercially useful as a tablet that disintegrates or disperses in water within 60 seconds when added to water. In addition, it is possible to solve, at once, various problems arising from the use of conventional pesticides by minimizing the risk of user's exposure to pesticides due to scattering and dust generation of conventional solid pesticide formulations, involving no inconvenience of having to measure the product each time according to the dilution ratio since the weight of each tablet is quantified, eliminating the causes of pesticide misuse and abuse due to the difficulty of measuring pesticides, and eliminating the hassle of collecting used packaging materials of pesticides.

**Best Mode for Carrying Out the Invention**

Hereinafter, various embodiments will be described in detail so that a person of ordinary skill in the art can easily practice the present invention. However, the embodiments may be implemented in several different forms and are not limited to the embodiments described herein.

In the present specification, when a part is referred to as "comprising" an element, it is to be understood that the part may comprise other elements as well, unless otherwise indicated.

In the present specification, singular expressions are interpreted to cover singular or plural as interpreted in context, unless otherwise specified.

In addition, all numbers and expressions indicating the amounts of components, reaction conditions, and the like used herein are to be understood as being modified by the term "about" unless otherwise indicated.

In the present specification, terms such as first and second are used to describe various components, and the components should not be limited by the terms. The above terms are used only for the purpose of distinguishing one component from another.

An aspect of the present invention provides a pesticide tablet, which comprises a pesticide active ingredient; an extender with a water solubility of 10 to 250 g/100 ml; and a disintegrant.

The pesticide active ingredient may be an insecticide, acaricide, nematicide, fungicide, herbicide, insect growth regulator, or herbicidal plant growth regulator. In addition, the pesticide active ingredient may comprise a water-insoluble pesticide ingredient or a water-soluble pesticide ingredient.

The term "tablet" in the present invention comprises what are considered tablets in the art and comprises solid compaction forms such as briquettes and pellets.

The tablet has good dispersibility in water and good storage stability.

In a specific embodiment of the present invention, the tablet comprises a pesticide active ingredient to be used for crops, household use, gardens, or lawns. In such a case, it may further comprise other ingredients such as fertilizers.

In a specific embodiment of the present invention, the pesticide active ingredient may be at least one selected from the group consisting of glufosinate-P, MCPA, glyphosate, oxolinic acid, flucetosulfuron, dymron, mefenacet, pyrazosulfuron-ethyl, imazosulfuron, oxaziclomefone, penoxsulam, pretilachlor, mesotrione, pyriftalid, bensulfuron-methyl, thiobencarb, indanofan, pyriminobac-methyl, oxaziclomefone, carfentrazone-ethyl, fentrazamide, pyributicarb, benzobicyclon, metamifop, benfuresate, cyclosulfamuron, anilofos, azimsulfuron, pyrazolate, metazosulfuron, orysastrobin, isoprothiolane, carpropamid, fludioxonil, thiadinil, tricyclazole, thifluzamide, probenazole, fthalide, difenoconazole, propiconazole, validamycin, azoxystrobin, edifenphos, fenoxanil, acibenzolar-s-methyl, ferimzone, pencycuron, hexaconazole, diazinon, dinotefuran, etofenprox, methoxyfenozide, bensultap, clothianidin, buprofezin, isoprocarb, fenobucarb, benfuracarb, imidacloprid, carbofuran, carbosulfan, cartap, thiamethoxam, tebufenozide, fenobucarb, phenthoate, fipronil, and chlorantraniliprole, but it is not limited thereto.

In another specific embodiment of the present invention, the content of the pesticide active ingredient may be 10 to 80 parts by weight based on 100 parts by weight of the pesticide tablet. Specifically, the content of the pesticide active ingredient may be 10 parts by weight or more, 13 parts by weight or more, 16 parts by weight or more, 19 parts by weight or more, or 22 parts by weight or more, and 80 parts by weight or less, 75 parts by weight or less, 70 parts by weight or less, 65 parts by weight or less, 60 parts by weight or less, 55 parts by weight or less, 50 parts by weight or less, 45 parts by weight or less, or 40 parts by weight or less, based on 100 parts by weight of the pesticide tablet. More specifically, the content of the pesticide active ingredient may be 13 to 75 parts by weight, 16 to 70 parts by weight, 19 to 65 parts by weight, 22 to 60 parts by weight, 22 to 55 parts by weight, 22 to 50 parts by weight, 22 to 45 parts by weight, or 22 to 40 parts by weight, based on 100 parts by weight of the pesticide tablet, but it is not limited to these numerical ranges.

If the content of the pesticide active ingredient is outside the above range, there is a problem in that it is difficult to produce the efficacy of the desired tablet. On the other hand, when the content of the pesticide active ingredient satisfies the above range, it can be dispersed and disintegrated in water within the desired time to produce excellent pesticide efficacy.

The extender may be at least one selected from the group consisting of calcium carbonate, sodium carbonate, lactose, maltose, sucrose, xylose, sorbitol, glucose, ammonium sulfate, ammonium chloride, sodium chloride, urea, potassium sulfate, potassium formate, sodium sulfate, potassium chloride, citric acid, succinic acid, tartaric acid, and maleic acid, but it is not limited thereto.

In a specific embodiment of the present invention, the content of the extender may be 10 to 80 parts by weight based on 100 parts by weight of the pesticide tablet. Specifically, the content of the extender may be 10 parts by weight or more, 15 parts by weight or more, 18 parts by weight or more, 21 parts by weight or more, 24 parts by weight or more, or 25 parts by weight or more, and 80 parts by weight or less, 75 parts by weight or less, 70 parts by weight or less, 67 parts by weight or less, 64 parts by weight or less, 61 parts by weight or less, or 58 parts by weight or less, based on 100 parts by weight of the pesticide tablet. More specifically, the content of the extender may be 18 to 67 parts by weight, 21 to 64 parts by weight, 24 to 61 parts by weight, or 25 to 58 parts by weight, based on 100 parts by weight of the pesticide tablet, but it is not limited to these numerical ranges.

If the content of the extender is outside the above range, the disintegration and dispersion time of the tablet becomes longer, or the hardness becomes too high or low, making it difficult to commercialize the tablet. On the other hand, when the content of the extender satisfies the above range, the tablet has a disintegration and dispersion time that can maximize its effect, and a product with appropriate hardness can be prepared.

In another specific embodiment of the present invention, the extender may have a water solubility of 10 to 250 g/100 ml. Specifically, the water solubility of the extender may be 10 g/100 ml or more, 11 g/100 ml or more, 12 g/100 ml or more, 15 g/100 ml or more, or 20 g/100 ml or more, and 250 g/100 ml or less, 230 g/100 ml or less, 210 g/100 ml or less, 190 g/100 ml or less, 170 g/100 ml or less, 150 g/100 ml or less, 130 g/100 ml or less, 120 g/100 ml or less, 110 g/100 ml or less, 100 g/100 ml or less, or 80 g/100 ml or less. More specifically, the water solubility of the extender may be 10 to 230 g/100 ml, 10 to 210 g/100 ml, 10 to 190 g/100 ml, 10 to 170 g/100 ml, 10 to 150 g/100 ml, 11 to 150 g/100 ml, 10 to 130 g/100 ml, 11 to 130 g/100 ml, 10 to 120 g/100 ml, 11 to 120 g/100 ml, 10 to 110 g/100 ml, or 11 to 110 g/100 ml, but it is not limited to these numerical ranges.

If the water solubility of the extender is outside the above range, there is a problem in that the disintegration and dispersion time of the tablet becomes longer, or storage stability is significantly deteriorated. On the other hand, when the water solubility of the extender satisfies the above range, the disintegration and dispersion time of the tablet can be shortened, and the storage stability of a product can be enhanced.

In another specific embodiment of the present invention, the content of at least one selected from the group consisting of ammonium sulfate, ammonium chloride, sodium chloride, potassium chloride, potassium sulfate, potassium formate, and urea contained in the extender may be 30 to 100 parts by weight, based on 100 parts by weight of the extender. Specifically, the content of at least one selected from the group consisting of ammonium sulfate, ammonium chloride, sodium chloride, potassium chloride, potassium sulfate, potassium formate, and urea may be 30 parts by weight or more, 34 parts by weight or more, 38 parts by weight or more, 42 parts by weight or more, or 45 parts by weight or more, and 100 parts by weight or less, based on 100 parts by weight of the extender. More specifically, the content of at least one selected from the group consisting of ammonium sulfate, ammonium chloride, sodium chloride, potassium chloride, potassium sulfate, potassium formate, and urea may be 30 to 100 parts by weight, 34 to 100 parts by weight, 38 to 100 parts by weight, 42 to 100 parts by weight, or 45 to 100 parts by weight, based on 100 parts by weight of the extender, but it is not limited to these numerical ranges.

In another specific embodiment of the present invention, the content of at least one selected from the group consisting of ammonium sulfate, ammonium chloride, sodium chloride, potassium chloride, potassium sulfate, potassium formate, and urea may be 10 to 80 parts by weight, based on 100 parts by weight of the pesticide tablet. Specifically, the content of at least one selected from the group consisting of ammonium sulfate, ammonium chloride, sodium chloride, potassium chloride, potassium sulfate, potassium formate, and urea may be 10 parts by weight or more, 15 parts by weight or more, 18 parts by weight or more, or 20 parts by weight or more, and 80 parts by weight or less, 75 parts by weight or less, 70 parts by weight or less, 65 parts by weight or less, or 60 parts by weight or less, based on 100 parts by weight of the pesticide tablet. More specifically, the content of at least one selected from the group consisting of ammonium sulfate, ammonium chloride, sodium chloride, potassium chloride, potassium sulfate, potassium formate, and urea may be 10 to 75 parts by weight, 15 to 70 parts by weight, 18 to 65 parts by weight, or 20 to 60 parts by weight, based on 100 parts by weight of the pesticide tablet, but it is not limited to these numerical ranges.

When the content of at least one selected from the group consisting of ammonium sulfate, ammonium chloride, sodium chloride, potassium chloride, potassium sulfate, potassium formate, and urea is within the above range, the tablet has a disintegration and dispersion time that maximizes its effect, and a product with appropriate hardness can be prepared.

In another specific embodiment of the present invention, the tablet may further comprise at least one foam extender selected from the group consisting of sodium bicarbonate and anhydrous ammonium alum. In such a case, the tablet may be an effervescent pesticide tablet. The effervescent pesticide tablet may essentially comprise at least one foam extender selected from the group consisting of sodium carbonate and sodium bicarbonate. The effervescent pesticide tablet may comprise at least one foam extender selected from the group consisting of sodium carbonate and sodium bicarbonate in an amount of 10 to 40 parts by weight, 10 to 30 parts by weight, 15 to 30 parts by weight, or 15 to 25 parts by weight, based on 100 parts by weight of the effervescent pesticide tablet, but it is not limited to these numerical ranges.

The disintegrant may be at least one selected from the group consisting of a combination of carbonates and solid acids, agar, starch, hydroxypropyl starch, sodium alginate, carboxymethyl starch ether, Arabic gum, tragacanth, gelatin, casein, crystalline cellulose, calcium carboxymethyl cellulose, sodium laurate, carboxyl resins, croscarmellose sodium, sodium starch glycolate, polyvinylpolypyrrolidone, ammonium sulfate, potassium chloride, table salt, urea, anionic surfactant, ammonium chloride, calcium chloride, magnesium chloride, aluminum chloride, glucose, lactose, sodium glutamate, sodium inosinate, and dextrin, but it is not limited thereto.

In a specific embodiment of the present invention, the content of the disintegrant may be 3.5 parts by weight or more or 3.5 to 40 parts by weight based on 100 parts by weight of the extender (relative to 100 parts by weight of the extender). Specifically, the content of the disintegrant may be 3.6 parts by weight or more, 3.7 parts by weight or more, 3.8 parts by weight or more, 3.9 parts by weight or more, or 4.0 parts by weight or more, and 40 parts by weight or less, 35 parts by weight or less, 30 parts by weight or less, or 25 parts by weight or less, based on 100 parts by weight of the extender. More specifically, the content of the disintegrant may be 3.6 to 35 parts by weight, 3.7 to 35 parts by weight, 3.8 to 30 parts by weight, 3.9 to 30 parts by weight, or 4.0 to 25 parts by weight, based on 100 parts by weight of the extender, but it is not limited to these numerical ranges.

In another specific embodiment of the present invention, the content of the disintegrant may be 3 parts by weight or more or 3 to 20 parts by weight based on 100 parts by weight of the pesticide tablet. Specifically, the content of the disintegrant may be 3.5 parts by weight or more, 4 parts by weight or more, 4.5 parts by weight or more, or 5 parts by weight or more, and 20 parts by weight or less, 17 parts by weight or less, 14 parts by weight or less, 11 parts by weight or less, or 8 parts by weight or less, based on 100 parts by weight of the pesticide tablet. More specifically, the content of the disintegrant may be 3.5 to 17 parts by weight, 4 to 14 parts by weight, 4.5 to 11 parts by weight, 5 to 8 parts by weight, or 3.5 to 6.5 parts by weight, based on 100 parts by weight of the pesticide tablet, but it is not limited to these numerical ranges.

In another specific embodiment of the present invention, the content of the disintegrant may be 5 parts by weight or more or 5 to 80 parts by weight based on 100 parts by weight of the pesticide active ingredient (relative to 100 parts by weight of the pesticide active ingredient). Specifically, the content of the disintegrant may be 6 parts by weight or more, 7 parts by weight or more, or 8 parts by weight or more, and 80 parts by weight or less, 70 parts by weight or less, 60 parts by weight or less, 50 parts by weight or less, 40 parts by weight or less, or 30 parts by weight or less, based on 100 parts by weight of the pesticide active ingredient. More specifically, the content of the disintegrant may be 5 to 70 parts by weight, 5 to 60 parts by weight, 6 to 50 parts by weight, 7 to 40 parts by weight, or 8 to 30 parts by weight, based on 100 parts by weight of the pesticide active ingredient, but it is not limited to these numerical ranges.

If the content of the disintegrant is outside the above range, there is a problem in that the disintegration and dispersion time of the tablet becomes longer, or storage stability is significantly deteriorated.

In another specific embodiment of the present invention, the extender may be ammonium chloride, and the content of the disintegrant may be 8 to 40 parts by weight based on 100 parts by weight of the ammonium chloride (relative to 100 parts by weight of the ammonium chloride). Specifically, the content of the disintegrant may be 8 parts by weight or more, 8.5 parts by weight or more, or 9 parts by weight or more, and 40 parts by weight or less, 35 parts by weight or less, 32 parts by weight or less, 30 parts by weight or less, or 28 parts by weight or less, based on 100 parts by weight of the ammonium chloride. More specifically, the content of the disintegrant may be 8.5 to 35 parts by weight, 8.5 to 32 parts by weight, 9 to 30 parts by weight, or 9 to 28 parts by weight, based on 100 parts by weight of the ammonium chloride, but it is not limited to these numerical ranges.

In another specific embodiment of the present invention, the disintegrant may be polyvinylpolypyrrolidone, and the content of the extender may be 2,857 parts by weight or less or 250 to 2,857 parts by weight based on 100 parts by weight of the polyvinylpolypyrrolidone (relative to 100 parts by weight of the polyvinylpolypyrrolidone). Specifically, the content of the extender may be 250 parts by weight or more, 350 parts by weight or more, 450 parts by weight or more, 550 parts by weight or more, or 650 parts by weight or more, and 2,500 parts by weight or less, 2,200 parts by weight or less, 1,800 parts by weight or less, 1,500 parts by weight or less, or 1,250 parts by weight or less, based on 100 parts by weight of the polyvinylpolypyrrolidone. More specifically, the content of the extender may be 350 to 2,500 parts by weight, 450 to 2,200 parts by weight, 540 to 1,500 parts by weight, 550 to 1,350 parts by weight, or 555 to 1,250 parts by weight, based on 100 parts by weight of the polyvinylpolypyrrolidone, but it is not limited to these numerical ranges.

In a specific embodiment of the present invention, the pesticide tablet may further comprise at least one additive selected from the group consisting of surfactants, binders, and lubricants.

The surfactant has the function of assisting the pesticide active ingredient to spread in water and adhere well to crops or the like, and it may additionally function as a binder (for example, to enhance the strength of the pesticide composition) or a disintegrant.

Specifically, the surfactant may be an anionic surfactant such as fatty acid salt, alkyl sulfosuccinate, dialkyl sulfosuccinate, polycarboxylate, alkyl sulfate ester salt, alkyl sulfate, alkylaryl sulfate, alkyl diglycol ether sulfate, alcohol sulfate ester salt, alkyl sulfonate, alkylaryl sulfonate, aryl sulfonate, lignin sulfonate, alkyldiphenyl ether disulfonate, polystyrene sulfonate, alkyl phosphate ester salt, alkylaryl phosphate, styryl aryl phosphate, polyoxyethylene alkyl ether sulfate ester salt, polyoxyethylene alkylaryl ether sulfate, polyoxyethylene alkyl ether sulfate ester salt, polyoxyethylene alkyl ether phosphate, polyoxyethylene alkylaryl phosphate ester, salt of formalin naphthalene sulfonic acid condensate, polyacrylate, sodium acrylate homopolymer, and isobutylene maleic anhydride copolymer; or a nonionic surfactant such as sorbitan fatty acid ester, glycerin fatty acid ester, fatty acid polyglyceride, fatty acid alcohol polyglycol ether, acetylene glycol, acetylene alcohol, oxyalkylene block polymer, polyoxyethylene alkyl ether, polyoxyethylene alkylaryl ether, polyoxyethylene styryl aryl ether, polyoxyethylene glycol alkyl ether, polyoxyethylene fatty acid ester, polyoxyethylene sorbitan fatty acid ester, polyoxyethylene glycerin fatty acid ester, polyoxyethylene hydrogenated castor oil, polyoxypropylene fatty acid ester, polyoxyethylene polyoxypropylene glycol, and polyalkylene glycol. They may be used alone or in combination of two or more thereof. When they are mixed, the ratio may also be appropriately selected. More specifically, the surfactant may comprise at least one selected from the group consisting of naphthalene sulfonate and propane sulfonate, but it is not limited thereto.

In a specific embodiment of the present invention, the content of the surfactant may be 1 to 30 parts by weight based on 100 parts by weight of the extender (relative to 100 parts by weight of the extender). Specifically, the content of the surfactant may be 1 part by weight or more, 5 parts by weight or more, 10 parts by weight or more, or 15 parts by weight or more, and 30 parts by weight or less, 25 parts by weight or less, or 20 parts by weight or less, based on 100 parts by weight of the extender. More specifically, the content of the surfactant may be 5 to 25 parts by weight, 10 to 25 parts by weight, 10 to 20 parts by weight, 15 to 25 parts by weight, or 15 to 20 parts by weight, based on 100 parts by weight of the extender, but it is not limited to these numerical ranges.

In another specific embodiment of the present invention, the content of the surfactant may be 1 to 30 parts by weight based on 100 parts by weight of the pesticide tablet. Specifically, the content of the surfactant may be 1 part by weight or more, 2 parts by weight or more, 3 parts by weight or more, or 4 parts by weight or more, and 30 parts by weight or less, 25 parts by weight or less, 20 parts by weight or less, or 15 parts by weight or less, based on 100 parts by weight of the pesticide tablet. More specifically, the content of the surfactant may be 2 to 25 parts by weight, 3 to 20 parts by weight, or 4 to 15 parts by weight, based on 100 parts by weight of the pesticide tablet, but it is not limited to these numerical ranges.

The binder may function to control the hardness of the tablet.

Specifically, the binder may be various gums such as guar gum, locust bean gum, tragacanth gum, xanthan gum, and Arabic gum; alginic acid derivatives such as sodium alginate, ammonium alginate, and propylene glycol alginate; organic polymer compounds such as polyvinyl alcohol, polyvinyl methacrylate, polyethylene oxide, polyacrylic acid, sodium polyacrylate, and polyacrylic acid amide; animal or vegetable water-soluble proteins such as egg white, albumin, casein, and gelatin; cellulose derivatives such as methyl cellulose, carboxymethyl cellulose, sodium carboxymethyl cellulose, carboxyethyl cellulose, hydroxyethyl cellulose, hydroxypropyl cellulose, and hydroxypropyl methyl cellulose; starches such as dextrin, starch, sodium carboxymethyl starch, hydroxyethyl starch, and hydroxypropyl starch; or lignin sulfonic acid derivatives such as sodium lignin sulfonate and calcium lignin sulfonate. They may be used alone or in combination of two or more thereof. When they are mixed, the ratio may also be appropriately selected. Some of them also function as a disintegrant. More specifically, the binder may comprise hydroxypropyl methyl cellulose, but it is not limited to.

In a specific embodiment of the present invention, the content of the binder may be 1 to 20 parts by weight based on 100 parts by weight of the extender (relative to 100 parts by weight of the extender). Specifically, the content of the binder may be 1 part by weight or more, 3 parts by weight or more, 5 parts by weight or more, or 7 parts by weight or more, and 20 parts by weight or less, 15 parts by weight or less, 13 parts by weight or less, or 11 parts by weight or less, based on 100 parts by weight of the extender. More specifically, the content of the binder may be 3 to 15 parts by weight, 5 to 13 parts by weight, or 7 to 11 parts by weight, based on 100 parts by weight of the extender, but it is not limited to these numerical ranges.

In a specific embodiment of the present invention, the content of the binder may be 1 to 20 parts by weight based on 100 parts by weight of the pesticide tablet. Specifically, the content of the binder may be 1 part by weight or more, 1.5 parts by weight or more, 2 parts by weight or more, 2.5 parts by weight or more, or 3 parts by weight or more, and 20 parts by weight or less, 16 parts by weight or less, 13 parts by weight or less, 10 parts by weight or less, or 7 parts by weight or less, based on 100 parts by weight of the pesticide tablet. More specifically, the content of the binder may be 1.5 to 16 parts by weight, 2 to 13 parts by weight, 2.5 to 10 parts by weight, or 3 to 7 parts by weight, based on 100 parts by weight of the pesticide tablet, but it is not limited to these numerical ranges.

The lubricant may function to facilitate the flow of the extender.

Specifically, the lubricant may be polyethylene glycol, propylene glycol, glycerin ester, calcium stearate, magnesium stearate, talc, or the like. They may be used alone or in combination of two or more thereof. When they are mixed, the ratio may also be appropriately selected. More specifically, the lubricant may comprise magnesium stearate, but it is not limited thereto.

In another specific embodiment of the present invention, the content of the lubricant may be 0.1 to 5 parts by weight based on 100 parts by weight of the extender (relative to 100 parts by weight of the extender). Specifically, the content of the lubricant may be 0.1 part by weight or more, 0.5 part by weight or more, 1.0 part by weight or more, or 1.5 parts by weight or more, and 5 parts by weight or less, 4 parts by weight or less, 3 parts by weight or less, or 2 parts by weight or less, based on 100 parts by weight of the extender. More specifically, the content of the lubricant may be 0.5 to 4 parts by weight, 1.0 to 3 parts by weight, or 1.5 to 2 parts by weight, based on 100 parts by weight of the extender, but it is not limited to these numerical ranges.

In another specific embodiment of the present invention, the content of the lubricant may be 0.1 to 5 parts by weight based on 100 parts by weight of the pesticide tablet. Specifically, the content of the lubricant may be 0.1 part by weight or more, 0.2 part by weight or more, 0.3 part by weight or more, 0.4 part by weight or more, or 0.5 part by weight or more, and 5 parts by weight or less, 4 parts by weight or less, 3 parts by weight or less, 2 parts by weight or less, or 1 part by weight or less, based on 100 parts by weight of the pesticide tablet. More specifically, the content of the lubricant may be 0.2 to 4 parts by weight, 0.3 to 3 parts by weight, 0.4 to 2 parts by weight, or 0.5 to 1.5 parts by weight, based on 100 parts by weight of the pesticide tablet, but it is not limited to these numerical ranges.

If the content of each of the surfactant, binder, and lubricant is outside the above range, there may be a problem in terms of the tablet hardness and production efficiency of products.

In a specific embodiment of the present invention, the tablet may have a disintegration and dispersion time of 60 seconds or shorter. Specifically, the disintegration and dispersion time of the tablet may be 60 seconds or shorter, 58 seconds or shorter, 56 seconds or shorter, 54 seconds or shorter, 52 seconds or shorter, 50 seconds or shorter, 48 seconds or shorter, or 45 seconds or shorter, but it is not limited to these numerical ranges.

For example, the disintegration and dispersion time of the tablet is measured by placing 1 tablet (5 grams) in a container, adding 10 liters of water at a temperature of about 22°C to the container, and measuring the time for 1 tablet to completely disintegrate and disperse. In such an event, to determine whether the tablet has been completely disintegrated and dispersed, 100 ml is taken from 5 random points of the solution, in which the table has been disintegrated and dispersed, to measure the concentrations of the 5 solution samples. If the standard deviation is 25 mg/L or less, the tablet is evaluated as completely disintegrated and dispersed.

When the disintegration and dispersion time of the tablet satisfies the above range, the worker's working hours can be shortened, and tableting workability can be enhanced since the tablet disintegrates in a short period of time in the pesticide spray container. In addition, since the pesticide active ingredient is evenly dispersed within the spray container, excellent efficacy can be achieved.

In a specific embodiment of the present invention, the tablet may have a hardness of 50 to 200 Newtons (N). Specifically, the hardness of the tablet may be 50 N or more, 60 N or more, 70 N or more, 80 N or more, 90 N or more, or 100 N or more, and 200 N or less, 180 N or less, 160 N or less, 150 N or less, 140 N or less, or 130 N or less. More specifically, the hardness of the tablet may be 60 to 180 N, 70 to 160 N, 80 to 150 N, 90 to 140 N, or 100 to 130 N, but it is not limited to these numerical ranges.

As the hardness of the tablet satisfies the above range, storage stability can be maximized. On the other hand, if the hardness of the tablet is outside the above range, there is a problem in terms of the productivity and commercialization of the tablet.

The shape of the tablet may be cylindrical, square, polygonal, donut-shaped, or elliptical, but it is not limited thereto.

When the tablet has a cylindrical shape, the average diameter may be 1.5 cm to 3 cm, specifically, 2 cm to 3 cm, but it is not limited to these numerical ranges.

The mass of one tablet may be 3 grams to 20 grams, 3 grams to 15 grams, 3 grams to 10 grams, or 3 grams to 8 grams, but it is not limited to these numerical ranges.

In a specific embodiment of the present invention, the tablet may have a suspension rate of 60 to 80%. Specifically, the suspension rate of the tablet may be 60% or more, 65% or more, or 70% or more. More specifically, the suspension rate of the tablet may be 65 to 80% or 70 to 80%, but it is not limited to these numerical ranges.

If the suspension rate of the tablet is outside the above range, there is a problem in terms of the drug efficacy and physical properties.

In a specific embodiment of the present invention, the tablet may have a powder degree of 95 to 100%. Specifically, the powder degree of the tablet may be 95% or more, 96% or more, 97% or more, or 98% or more. More specifically, the powder degree of the tablet may be 96 to 100%, 97 to 100%, or 98 to 100%, but it is not limited to these numerical ranges.

If the powder degree of the tablet is outside the above range, it may cause the sprayer to malfunction, and there is a problem in terms of the efficacy of the tablet.

The pesticide tablet according to the present invention is in the form of a tablet that disperses and disintegrates in a short period of time, which is capable of minimizing the risk of user's exposure to pesticides and enabling simple quantitative measurement to reduce the misuse and abuse of pesticides, whereby various problems arising from the use of conventional pesticides can be solved.

In addition, it can be applied as a technology to incorporate fertilizers or ingredients useful in crop cultivation into the pesticide tablets. As a result, it can be established as a technology for safe use, low labor input, and environmentally friendly crop cultivation.

Another aspect of the present invention provides a process for preparing a pesticide tablet. Specifically, the process for preparing a pesticide tablet according to the present invention comprises mixing a pesticide active ingredient and a first extender and then pulverizing them to prepare a first mixture; mixing the first mixture, a second extender, and a disintegrant to prepare a second mixture; and tableting the second mixture into tablets, wherein each of the first extender and the second extender has a water solubility of 10 to 250 g/100 ml.

In a specific embodiment of the present invention, the first extender and the second extender may each have a water solubility of 10 to 250 g/100 ml. Specifically, the water solubility of each of the first extender and the second extender may be 10 g/100 ml or more or 11 g/100 ml or more, and 250 g/100 ml or less, 230 g/100 ml or less, 210 g/100 ml or less, 190 g/100 ml or less, 170 g/100 ml or less, 150 g/100 ml or less, 130 g/100 ml or less, 120 g/100 ml or less, or 110 g/100 ml or less. More specifically, the water solubility of each of the first extender and the second extender may be 10 to 230 g/100 ml, 10 to 210 g/100 ml, 10 to 190 g/100 ml, 10 to 170 g/100 ml, 10 to 150 g/100 ml, 11 to 150 g/100 ml, 10 to 130 g/100 ml, 11 to 130 g/100 ml, 10 to 120 g/100 ml, 11 to 120 g/100 ml, 10 to 110 g/100 ml, or 11 to 110 g/100 ml, but it is not limited to these numerical ranges.

In the process for preparing a pesticide tablet according to the present invention, the description of each of the first extender and the second extender is the same as that described for the extender in the pesticide tablet, and the descriptions of the pesticide active ingredient, disintegrant, surfactant, binder, and lubricant are the same as those described in the pesticide tablet.

In the process for preparing a pesticide tablet according to the present invention, first, a step of mixing a pesticide active ingredient and a first extender and then pulverizing them to prepare a first mixture is carried out.

The step of preparing the first mixture may further comprise adding an additive. The additive may be at least one selected from the group consisting of surfactants, binders, and lubricants.

The pulverizing may use a dry pulverizing method.

The dry pulverizing method may be a method known as a common dry pulverizing method.

In the dry pulverizing, a pulverizer such as power mills, coffee mills, hammer mills, pin mills, jet mills, and nea mills may be used, and an appropriate pulverizer may be selected depending on the characteristics and purpose of the material to be pulverized. Specifically, a jet mill may be used.

The average particle diameter of the particles contained in the first mixture may be 5 to 30 microns. Specifically, the average particle diameter of the particles may be 5 to 25 microns, 5 to 20 microns, 5 to 15 microns, or 5 to 10 microns, but it is not limited to these numerical ranges.

Next, the first mixture, a second extender, and a disintegrant are mixed to prepare a second mixture.

The step of preparing the second mixture may further comprise adding an additive. The additive may be at least one selected from the group consisting of surfactants, binders, and lubricants.

Subsequently, the second mixture is tableted into pesticide tablets.

The tableting may be carried out using a common tablet preparation process.

The description of the pesticide tablet prepared by the above preparation process of the present invention is as described above.

**Mode for the Invention**

Hereinafter, the present invention will be described in detail. However, the following test examples are for illustrative purposes only, and the scope of the present invention is not limited thereto.

**Test Example 1: Preparation of non-effervescent pesticide tablets**

(1) 26 parts by weight of chlorantraniliprole (common name) as a pesticide active ingredient; and 25 parts by weight of ammonium chloride as a first extender were mixed, which was pulverized such that the average particle size was 8 microns or less, thereby preparing a first mixture.

(2) 51 parts by weight of the first mixture; 7 parts by weight of naphthalene sulfonate and 2 parts by weight of propane sulfonate as a surfactant; 10 parts by weight of urea and 19 parts by weight of ammonium chloride as a second extender; 5 parts by weight of hydroxypropyl methyl cellulose as a binder; 5 parts by weight of polyvinylpolypyrrolidone as a disintegrant; and 1 part by weight of magnesium stearate as a lubricant were homogeneously mixed to prepare a second mixture.

(3) The second mixture was prepared into tablets with a diameter of 2.5 cm, a mass of 5 grams, and a hardness of 120 N (Newton).

**Test Examples 2 to 25: Preparation of non-effervescent pesticide tablets**

In Test Examples 2 to 25, tablets were prepared in the same manner as in Test Example 1, except that the components and parts by weight as listed in Table 1 below were used as the pesticide active ingredient, first extender, and second extender, respectively.

[Table 1]

| Test Ex. No. | Pesticide active ingredient in step (1) | | First extender in step (1) | | | Second extender in step (2) | | | | | |
|---|---|---|---|---|---|---|---|---|---|---|---|
| | Component | Part by weight | Component | Water solubility | Part by weight | Component | Water solubility | Part by weight | Component | Water solubility | Part by weight |
| 1 | Chlorantraniliprole | 26 | Ammonium chloride | 37.2 | 25 | Urea | 100 | 10 | Ammonium chloride | 37.2 | 19 |
| 2 | Chlorantraniliprole | 26 | Ammonium sulfate | 75.4 | 25 | Ammonium sulfate | 75.4 | 10 | Ammonium chloride | 37.2 | 19 |
| 3 | Chlorantraniliprole | 26 | Ammonium sulfate | 75.4 | 25 | Ammonium sulfate | 75.4 | 29 | - | - | - |
| 4 | Chlorantraniliprole | 26 | Ammonium chloride | 37.2 | 25 | Ammonium sulfate | 75.4 | 29 | - | - | - |
| 5 | Chlorantraniliprole | 26 | Sodium chloride | 35.9 | 25 | Sodium chloride | 35.9 | 10 | Ammonium chloride | 37.2 | 19 |
| 6 | Chlorantraniliprole | 26 | Sodium chloride | 35.9 | 25 | Sodium chloride | 35.9 | 29 | - | - | - |
| 7 | Chlorantraniliprole | 26 | Ammonium chloride | 37.2 | 25 | Sodium chloride | 35.9 | 29 | - | - | - |
| 8 | Chlorantraniliprole | 26 | Ammonium chloride | 37.2 | 25 | - | - | - | Ammonium chloride | 37.2 | 29 |
| 9 | Chlorantraniliprole | 26 | Potassium chloride | 34 | 25 | - | - | - | Ammonium chloride | 37.2 | 29 |
| 10 | Chlorantraniliprole | 26 | Potassium chloride | 34 | 25 | Potassium chloride | 34 | 29 | - | - | - |
| 11 | Chlorantraniliprole | 26 | Potassium sulfate | 12 | 25 | - | - | - | Ammonium chloride | 37.2 | 29 |
| 12 | Chlorantraniliprole | 26 | Potassium sulfate | 12 | 25 | Potassium sulfate | 12 | 29 | - | - | - |
| 13 | Chlorantraniliprole | 26 | Ammonium chloride | 37.2 | 25 | Potassium formate | 108 | 10 | Ammonium chloride | 37.2 | 19 |

(continued)

| Test Ex. No. | Pesticide active ingredient in step (1) | | First extender in step (1) | | | Second extender in step (2) | | | | | |
|---|---|---|---|---|---|---|---|---|---|---|---|
| | Component | Part by weight | Component | Water solubility | Part by weight | Component | Water solubility | Part by weight | Component | Water solubility | Part by weight |
| 14 | Chlorantraniliprole | 26 | Ammonium chloride | 37.2 | 25 | Potassium formate | 108 | 29 | - | - | - |
| 15 | Chlorantraniliprole | 41 | Ammonium chloride | 37.2 | 39 | - | - | - | - | - | - |
| 16 | Chlorantraniliprole | 52 | Ammonium chloride | 37.2 | 28 | - | - | - | - | - | - |
| 17 | Chlorantraniliprole | 41 | Potassium chloride | 34 | 39 | - | - | - | - | - | - |
| 18 | Chlorantraniliprole | 52 | Potassium chloride | 34 | 28 | - | - | - | - | - | - |
| 19 | Chlorantraniliprole | 41 | Potassium sulfate | 12 | 39 | - | - | - | - | - | - |
| 20 | Chlorantraniliprole | 52 | Potassium sulfate | 12 | 28 | - | - | - | - | - | - |
| 21 | Chlorantraniliprole | 26 | Ammonium chloride | 37.2 | 25 | Lactose | 20 | 29 | - | - | - |
| 22 | Chlorantraniliprole | 26 | Ammonium chloride | 37.2 | 25 | Glucose | 90.9 | 10 | Ammonium chloride | 37.2 | 19 |
| 23 | Chlorantraniliprole | 26 | Ammonium chloride | 37.2 | 25 | Sucrose | 202 | 29 | - | - | - |
| 24 | Chlorantraniliprole | 26 | Ammonium chloride | 37.2 | 25 | Xylose | 133 | 10 | Ammonium chloride | 37.2 | 19 |
| 25 | Chlorantraniliprole | 26 | Ammonium chloride | 37.2 | 25 | Sorbitol | 235 | 10 | Ammonium chloride | 37.2 | 19 |

**Test Example 26: Preparation of effervescent pesticide tablets**

(1) 26 parts by weight of chlorantraniliprole (common name) as a pesticide active ingredient; and 10 parts by weight of sodium carbonate and 15 parts by weight of sodium bicarbonate as a first extender were mixed, which was pulverized such that the average particle size was 8 microns or less, thereby preparing a first mixture.

(1)-2 15 parts by weight of tartaric acid as a first extender was added to the first mixture, which was dried at about 70°C for about 30 minutes while stirring, keeping the moisture content to less than 1%, thereby preparing a second mixture.

(2) 51 parts by weight of the second mixture; 7 parts by weight of naphthalene sulfonate and 2 parts by weight of propane sulfonate as a surfactant; 14 parts by weight of ammonium chloride as a second extender; 5 parts by weight of hydroxypropyl methyl cellulose as a binder; 5 parts by weight of polyvinylpolypyrrolidone as a disintegrant; and 1 part by weight of magnesium stearate as a lubricant were homogeneously mixed to prepare a third mixture.

(3) The third mixture was prepared into tablets with a diameter of 2.5 cm, a mass of 5 grams, and a hardness of 120 N (Newton).

The components, water solubility, and part by weight of each of the first extender and the second extender used in Test Example 26 are shown in Table 2 below.

[Table 2]

| Test Ex. No. | First extender in step (1) | | | | | | | | | Second extender in step (2) | | |
|---|---|---|---|---|---|---|---|---|---|---|---|---|
| | Component | Water solubility | Part by weight | Component | Water solubility | Part by weight | Component | Water solubility | Part by weight | Component | Water solubility | Part by weight |
| 26 | Sodium carbonate | 21.5 | 10 | Sodium bi-carbonate | 9.6 | 15 | Tartaric acid | 133 | 15 | Ammonium chloride | 37.2 | 14 |

**Test Example 27: Preparation of effervescent pesticide tablets**

(1) 26 parts by weight of chlorantraniliprole (common name) as a pesticide active ingredient; and 10 parts by weight of sodium carbonate and 15 parts by weight of sodium bicarbonate as a first extender were mixed, which was pulverized such that the average particle size was 8 microns or less, thereby preparing a first mixture.

(1)-2 15 parts by weight of tartaric acid as a first extender was added to the first mixture, which was dried at about 70°C for about 30 minutes while stirring, keeping the moisture content to less than 1%, thereby preparing a second mixture.

(2) 51 parts by weight of the second mixture; 7 parts by weight of naphthalene sulfonate and 2 parts by weight of propane sulfonate as a surfactant; 14 parts by weight of anhydrous ammonium alum as a second extender; 5 parts by weight of hydroxypropyl methyl cellulose as a binder; 5 parts by weight of polyvinylpolypyrrolidone as a disintegrant; and 1 part by weight of magnesium stearate as a lubricant were homogeneously mixed to prepare a third mixture.

(3) The third mixture was prepared into tablets with a diameter of 2.5 cm, a mass of 5 grams, and a hardness of 120 N (Newton).

The components, water solubility, and part by weight of each of the first extender and the second extender used in Test Example 27 are shown in Table 3 below.

[Table 3]

| Test Ex. No. | First extender in step (1) | | | | | | | | | Second extender in step (2) | | |
|---|---|---|---|---|---|---|---|---|---|---|---|---|
| | Component | Water solubility | Part by weight | Component | Water solubility | Part by weight | Component | Water solubility | Part by weight | Component | Water solubility | Part by weight |
| 27 | Sodium carbonate | 21.5 | 10 | Sodium bicarbonate | 9.6 | 15 | Tartaric acid | 133 | 15 | Anhydrous ammonium alum | 5 | 14 |

**Test Examples 28 to 30**

In Test Examples 28 to 30, tablets were prepared in the same manner as in Test Example 1, except that the components and parts by weight as listed in Table 4 below were used as the first extender and second extender, respectively.

[Table 4]

| Test Ex. No. | Pesticide active ingredient in step (1) | | First extender in step (1) | | | Second extender in step (2) | | |
|---|---|---|---|---|---|---|---|---|
| | Component | Part by weight | Component | Water solubility | Part by weight | Component | Water solubility | Part by weight |
| 28 | Chlorantraniliprole | 26 | Flactose | 375 | 25 | Flactose | 375 | 29 |
| 29 | Chlorantraniliprole | 26 | Zinc chloride | 395 | 25 | Zinc chloride | 395 | 29 |
| 30 | Chlorantraniliprole | 26 | Potassium acetate | 256 | 25 | Potassium acetate | 256 | 29 |

**Test Examples 31 to 34**

In Test Examples 31 to 34, tablets were prepared in the same manner as in Test Example 1, except that the components and parts by weight as listed in Table 5 below were used as the first extender, second extender, binder, and disintegrant, respectively.

[Table 5]

| Test Ex. No. | Pesticide active ingredient in step (1) | | First extender in step (1) | | | Second extender in step (2) | | | Binder in step (2) | | Additive (disintegrant) in step (2) | |
|---|---|---|---|---|---|---|---|---|---|---|---|---|
| | Comp onent | Part by weight | Comp onent | Water solubil ity | Part by weight | Comp onent | Water solubil ity | Part by weight | Comp onent | Part by weight | Comp onent | Part by weight |
| 31 | Chlora ntranil iprole | 26 | Ammo nium chlorid e | 37.2 | 25 | Ammo nium chlorid e | 37.2 | 36 | Hydro xyprop yl methyl cellulo se | 2 | Polyvi nylpol ypyrro lidone | 1 |
| 32 | Chlora ntranil iprole | 26 | Ammo nium chlorid e | 37.2 | 25 | Ammo nium chlorid e | 37.2 | 34 | Hydro xyprop yl methyl cellulo se | 3 | Polyvi nylpol ypyrro lidone | 2 |
| 33 | Chlora ntranil iprole | 26 | Ammo nium chlorid e | 37.2 | 25 | Ammo nium chlorid e | 37.2 | 25 | Hydro xyprop yl methyl cellulo se | 7 | Polyvi nylpol ypyrro lidone | 7 |
| 34 | Chlora ntranil iprole | 26 | Ammo nium chlorid e | 37.2 | 25 | Ammo nium chlorid e | 37.2 | 21 | Hydro xyprop yl methyl cellulo se | 9 | Polyvi nylpol ypyrro lidone | 9 |

**Evaluation Example 1: Evaluation of powder degree**

According to the pesticide inspection method within the Pesticide Management Act (Rural Development Administration Notice No. 1999-3), in principle, pesticides whose main ingredient and extender swell with water or are water-soluble are measured for the powder degree by a dry method. For others, they are measured by a wet method. In the present invention, a wet method was used.

1) 50 g of a sample was taken into a 200-ml beaker, and 60 to 80 ml of water was added thereto, which was well stirred with a glass swab to homogeneously disperse. The sample was transferred onto a 325-mesh sieve.

2) The remaining sample was transferred with 100 ml of water onto the sieve in the same manner. This procedure was repeated to completely transfer the sample onto the sieve.

3) Then, water was added in a small amount through a rubber tube, and the sieve was shaken horizontally to pass the sample. If necessary, it was swept lightly with a brush. When almost no sample was confirmed to come out of the discharged liquid, the remaining sample on the sieve was collected together. The residual sample was washed and transferred to a watch glass with a small amount of water and left to stand for a while. The supernatant was decanted to be discarded, the sample was dried in a water bath, the residue was weighed, and the passing amount of the sample was calculated as a percentage. The results are shown in Table 6 below.

**Evaluation Example 2: Evaluation of suspensionability**

A gram of a sample active ingredient was taken into a beaker, and 50 ml of water at 20°C was added thereto, which was sufficiently stirred to homogeneously disperse. It was transferred to a 250-ml stoppered mess cylinder, and water at 20°C was added to make 250 ml. It was allowed to stand for 15 minutes, then inverted vigorously 30 times for 1 minute to be well mixed, and allowed to stand for 5 minutes. Thereafter, a 25-ml volumetric pipette was slowly put into the liquid so that the tip was in the center of the liquid. 25 ml of the test liquid was quietly collected to measure the content of the active ingredient (B gram). Alternatively, if it was impossible to analyze the active ingredient, the dry matter was weighed. Then, the suspension rate was calculated by the following equation.

[Equation]

$$\text{Suspension rate (\%)} = [(B \times 10)/A] \times 100$$

In general, if the suspension ratio is 70% or more, suspensionability is considered good. If it is 75% or more, suspensionability is considered to be excellent.
The suspensionability (suspension ratio) tested as above is shown in Table 6 below.

**Evaluation Example 3: Evaluation of disintegration and dispersion time**

1 Tablet (5 grams) was placed in a 10-liter transparent container. While 10 liters of water (water temperature 22°C) was added into the container, the time for the one tablet to completely disintegrate and disperse was measured. The results are shown in Table 6 below.

**Evaluation Example 4: Evaluation of tablet hardness**

The hardness of each tablet was measured using a model DS2-200N of OPTECH. The results are shown in Table 6 below.

**Evaluation Example 5: Evaluation of tableting workability**

Each mixture of the Test Examples was transferred to a rotary bundle (15 pins) tableting machine and compression molded at a pressure of 100 psi to produce immediate-release tablets with an external appearance of 5 grams in weight, 2.5 centimeters in diameter, and 0.7 centimeters in thickness. It was observed by the naked eye whether the immediate-release tablets were easily released from the mold or whether the mixture stuck to the upper and lower punches and dies. The tableting workability of each immediate-release tablet was measured. The results are shown in Table 6 below.

**Evaluation Example 6: Evaluation of storage stability**

The tablets prepared in the Test Examples were each packaged in an aluminum packaging material or stored as exposed to the air. Each tablet packaged in an aluminum packaging material was evaluated as very stable if there was no change in its appearance, hardness, and mechanical strength even after 6 weeks or longer at 50°C. If the hardness of the tablet exposed to the air decreased by 10% or more after 24 hours as compared with the initial level, the hardness was evaluated to have decreased. If the appearance of the tablet exposed to the air was changed after 72 hours or 1 hour that was observed by the naked eye, the appearance of the tablet was evaluated to have been changed.

**Evaluation Example 7: Evaluation of pesticide efficacy and toxicity**

Test packaging was selected to measure the efficacy and toxicity of the immediate-release tablets prepared in Test Examples 4, 8, 21, and 28. In the test packaging, the immediate-release tablets prepared in the Test Examples were each diluted to the standard amount, and the diluted solution was then treated with foliage on the target crop. As a treatment method, the pepper tobacco moth was treated twice at 10-day intervals in the early stages of development, the pear and peach shoot moth was treated twice at 7-day intervals in the early stages of development, the cabbage cutworm was treated once in the early stages of development, and the apple oyster moth was treated twice at 10-day intervals in the early stages of development. After the treatment of the pesticide, the control value for each pest was measured at the time of the test to measure the pesticide efficacy. The toxicity to the target crop was measured on a scale from 0 to 5. The results are shown in Table 7 below.

[Table 6]

| Test Ex. No. | Powder degree (%) | Suspension rate (%) | Disintegration /dispersion time (sec) | Tablet hardness (N) | Tableting workability | Storage stability |
|---|---|---|---|---|---|---|
| Test Ex. 1 | 93 | 69 | 43 | 120 | Excellent | Very stable when packaged with an aluminum packaging material |
| Test Ex. 2 | 99 | 72 | 31 | 120 | Excellent | Very stable when packaged with an aluminum packaging material |
| Test Ex. 3 | 99 | 67 | 29 | 120 | Excellent | Very stable when packaged with an aluminum packaging material |
| Test Ex. 4 | 99 | 71 | 34 | 120 | Excellent | Very stable when packaged with an aluminum packaging material |
| Test Ex. 5 | 99 | 72 | 26 | 120 | Excellent | Very stable when packaged with an aluminum packaging material |
| Test Ex. 6 | 98 | 72 | 29 | 120 | Excellent | Very stable when packaged with an aluminum packaging material |
| Test Ex. 7 | 99 | 71 | 31 | 120 | Excellent | Very stable when packaged with an aluminum packaging material |
| Test Ex. 8 | 99 | 77 | 40 | 120 | Excellent | Very stable when packaged with an aluminum packaging material |
| Test Ex. 9 | 99 | 78 | 41 | 120 | Excellent | Very stable when packaged with an aluminum packaging material |
| Test Ex. 10 | 99 | 78 | 40 | 120 | Excellent | Very stable when packaged with an aluminum packaging material |
| Test Ex. 11 | 99 | 76 | 37 | 120 | Excellent | Very stable when packaged with an aluminum packaging material |
| Test Ex. 12 | 99 | 80 | 35 | 120 | Excellent | Very stable when packaged with an aluminum packaging material |
| Test Ex. 13 | 99 | 73 | 28 | 120 | Excellent | Very stable when packaged with an aluminum packaging material |
| Test Ex. 14 | 98 | 72 | 30 | 120 | Excellent | Very stable when packaged with an aluminum packaging material |
| Test Ex. 15 | 99 | 75 | 56 | 120 | Excellent | Very stable when packaged with an aluminum packaging material |

(continued)

| Test Ex. No. | Powder degree (%) | Suspension rate (%) | Disintegration /dispersion time (sec) | Tablet hardness (N) | Tableting workability | Storage stability |
|---|---|---|---|---|---|---|
| Test Ex. 16 | 99 | 75 | 60 | 120 | Excellent | Very stable when packaged with an aluminum packaging material |
| Test Ex. 17 | 99 | 74 | 49 | 120 | Excellent | Very stable when packaged with an aluminum packaging material |
| Test Ex. 18 | 99 | 76 | 51 | 120 | Excellent | Very stable when packaged with an aluminum packaging material |
| Test Ex. 19 | 99 | 74 | 46 | 120 | Excellent | Very stable when packaged with an aluminum packaging material |
| Test Ex. 20 | 99 | 73 | 52 | 120 | Excellent | Very stable when packaged with an aluminum packaging material |
| Test Ex. 21 | 99 | 79 | 55 | 120 | Intermediate | When exposed to the air, hardness decreased after 24 hours; appearance changed after 72 hours |
| Test Ex. 22 | 98 | 81 | 58 | 120 | Intermediate | When exposed to the air, hardness decreased after 24 hours; appearance changed after 72 hours |
| Test Ex. 23 | 99 | 78 | 48 | 120 | Intermediate | When exposed to the air, hardness decreased after 24 hours; appearance changed after 72 hours |
| Test Ex. 24 | 99 | 72 | 58 | 120 | Intermediate | When exposed to the air, hardness decreased after 24 hours; appearance changed after 72 hours |
| Test Ex. 25 | 99 | 78 | 49 | 120 | Intermediate | When exposed to the air, hardness decreased after 24 hours; appearance changed after 72 hours |
| Test Ex. 28 | 99 | 67 | 127 | 120 | Poor | When exposed to the air, appearance disintegrated within 1 hour |
| Test Ex. 29 | 99 | 70 | Not measurable | 120 | Poor | When exposed to the air, appearance disintegrated within 1 hour |
| Test Ex. 30 | 98 | 79 | 202 | 120 | Poor | When exposed to the air, appearance disintegrated within 1 hour |
| Test Ex. 31 | 99 | 67 | 475 | 120 | Excellent | Very stable when packaged with an aluminum packaging material |

(continued)

| Test Ex. No. | Powder degree (%) | Suspension rate (%) | Disintegration /dispersion time (sec) | Tablet hardness (N) | Tableting workability | Storage stability |
|---|---|---|---|---|---|---|
| Test Ex. 32 | 99 | 64 | 223 | 120 | Excellent | Very stable when packaged with an aluminum packaging material |
| Test Ex. 33 | 98 | 71 | 48 | 120 | Excellent | Very stable when packaged with an aluminum packaging material |
| Test Ex. 34 | 97 | 70 | 49 | 120 | Excellent | Very stable when packaged with an aluminum packaging material |

[Table 7]

| Test Ex. No. | Drug efficacy (control value) | | | | Toxicity (0-5) |
|---|---|---|---|---|---|
| | Pepper tobacco moth | Pear and peach shoot moth | Cabbage cutworm | Apple oyster moth | |
| Test Ex. 4 | 100 | 100 | 100 | 100 | 0 |
| Test Ex. 8 | 100 | 100 | 99.8 | 100 | 0 |
| Test Ex. 21 | 100 | 100 | 99 | 99 | 0 |
| Test Ex. 28 | 93 | 92 | 90 | 94 | 2 |

As a result of the above Evaluation Examples, it was confirmed that the pesticide tablet of the present invention not only maintained hardness, tableting workability, drug efficacy, and storage stability while exhibiting excellent powder degree and suspensionability, but also produced an excellent effect of complete disintegration and dispersion within a short period of time (60 seconds) when added to water.

**Claims**

1. A pesticide tablet, which comprises a pesticide active ingredient; an extender with a water solubility of 10 to 250 g/100 ml; and a disintegrant.

2. The pesticide tablet of claim 1, wherein the pesticide active ingredient is at least one selected from the group consisting of glufosinate-P, MCPA, glyphosate, oxolinic acid, flucetosulfuron, dymron, mefenacet, pyrazosulfuron-ethyl, imazosulfuron, oxaziclomefone, penoxsulam, pretilachlor, mesotrione, pyriftalid, bensulfuron-methyl, thiobencarb, indanofan, pyriminobac-methyl, oxaziclomefone, carfentrazone-ethyl, fentrazamide, pyributicarb, benzobicyclon, metamifop, benfuresate, cyclosulfamuron, anilofos, azimsulfuron, pyrazolate, metazosulfuron, orysastrobin, isoprothiolane, carpropamid, fludioxonil, thiadinil, tricyclazole, thifluzamide, probenazole, fthalide, difenoconazole, propiconazole, validamycin, azoxystrobin, edifenphos, fenoxanil, acibenzolar-s-methyl, ferimzone, pencycuron, hexaconazole, diazinon, dinotefuran, etofenprox, methoxyfenozide, bensultap, clothianidin, buprofezin, isoprocarb, fenobucarb, benfuracarb, imidacloprid, carbofuran, carbosulfan, cartap, thiamethoxam, tebufenozide, fenobucarb, phenthoate, fipronil, and chlorantraniliprole.

3. The pesticide tablet of claim 1, wherein the extender is at least one selected from the group consisting of calcium carbonate, sodium carbonate, lactose, maltose, sucrose, xylose, sorbitol, glucose, ammonium sulfate, ammonium chloride, sodium chloride, urea, potassium sulfate, potassium formate, sodium sulfate, potassium chloride, citric acid, succinic acid, tartaric acid, and maleic acid.

4. The pesticide tablet of claim 3, wherein the content of at least one selected from the group consisting of ammonium sulfate, ammonium chloride, sodium chloride, potassium chloride, potassium sulfate, potassium formate, and urea is 30 to 100 parts by weight based on 100 parts by weight of the extender.

5. The pesticide tablet of claim 1, wherein the disintegrant is at least one selected from the group consisting of a combination of carbonates and solid acids, agar, starch, hydroxypropyl starch, sodium alginate, carboxymethyl starch ether, Arabic gum, tragacanth, gelatin, casein, crystalline cellulose, calcium carboxymethyl cellulose, sodium laurate, carboxyl resins, croscarmellose sodium, sodium starch glycolate, polyvinylpolypyrrolidone, ammonium sulfate, potassium chloride, table salt, urea, anionic surfactant, ammonium chloride, calcium chloride, magnesium chloride, aluminum chloride, glucose, lactose, sodium glutamate, sodium inosinate, and dextrin.

6. The pesticide tablet of claim 1, wherein the pesticide tablet further comprises at least one additive selected from the group consisting of surfactants, binders, and lubricants.

7. The pesticide tablet of claim 6, wherein the content of the surfactant is 1 to 30 parts by weight based on 100 parts by weight of the extender.

8. The pesticide tablet of claim 6, wherein the content of the binder is 1 to 20 parts by weight based on 100 parts by weight of the extender.

9. The pesticide tablet of claim 6, wherein the content of the lubricant is 0.1 to 5 parts by weight based on 100 parts by weight of the extender.

10. The pesticide tablet of claim 1, wherein the content of the disintegrant is 3.5 parts by weight or more based on 100 parts by weight of the extender.

11. The pesticide tablet of claim 1, wherein the extender comprises ammonium chloride.

12. The pesticide tablet of claim 11, wherein the content of the disintegrant is 8 to 40 parts by weight based on 100 parts by weight of the ammonium chloride.

13. The pesticide tablet of claim 1, wherein the disintegrant comprises polyvinylpolypyrrolidone.

14. The pesticide tablet of claim 13, wherein the content of the extender is 2,857 parts by weight or less based on 100 parts by weight of the polyvinylpolypyrrolidone.

15. The pesticide tablet of claim 1, wherein the disintegration and dispersion time of the pesticide tablet is 60 seconds or shorter.

16. The pesticide tablet of claim 1, wherein the hardness of the pesticide tablet is 50 to 200 Newtons (N).

17. The pesticide tablet of claim 1, wherein the suspension ratio of the pesticide tablet is 60 to 80%.

18. The pesticide tablet of claim 1, wherein the powder degree of the pesticide tablet is 95 to 100%.

19. The pesticide tablet of claim 1, wherein the pesticide tablet further comprises at least one foam extender selected from the group consisting of sodium bicarbonate and anhydrous ammonium alum.

20. A process for preparing a pesticide tablet, which comprises:

    mixing a pesticide active ingredient and a first extender and then pulverizing them to prepare a first mixture;
    mixing the first mixture, a second extender, and a disintegrant to prepare a second mixture; and
    tableting the second mixture into tablets,
    wherein each of the first extender and the second extender has a water solubility of 10 to 250 g/100 ml.

21. The process for preparing a pesticide tablet of claim 20, wherein each of the first extender and the second extender has a water solubility of 10 to 110 g/100 ml.

22. The process for preparing a pesticide tablet of claim 20, wherein the step of preparing the first mixture further comprises adding an additive; and the additive is at least one selected from the group consisting of surfactants, binders, and lubricants.

## INTERNATIONAL SEARCH REPORT

| | International application No. |
|---|---|
| | **PCT/KR2022/018987** |

| | |
|---|---|
| **A.** | **CLASSIFICATION OF SUBJECT MATTER** |
| | **A01N 25/12**(2006.01)i; **A01N 25/08**(2006.01)i; **A01N 43/56**(2006.01)i; **A01N 47/36**(2006.01)i; **A01N 43/90**(2006.01)i; **A01N 41/02**(2006.01)i; **A01N 25/30**(2006.01)i |

According to International Patent Classification (IPC) or to both national classification and IPC

| | |
|---|---|
| **B.** | **FIELDS SEARCHED** |

Minimum documentation searched (classification system followed by classification symbols)

A01N 25/12(2006.01); A01N 25/00(2006.01); A01N 25/08(2006.01); A01N 25/22(2006.01); A01N 25/34(2006.01); A01N 53/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 농약(pesticide), 증량제(extender), 수용해도(water solubility), 붕해제(disintegrant), 정제(tablet)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X<br><br>Y | KR 10-0177143 B1 (AECI LIMITED) 01 April 1999 (1999-04-01)<br>See paragraphs [0002]-[0009] and [0114]; and claims 1, 3 and 4. | 1-10,13-22<br><br>11,12 |
| Y | KR 10-2014-0017518 A (SYNGENTA PARTICIPATIONS AG et al.) 11 February 2014 (2014-02-11)<br>See claims 1 and 7. | 11,12 |
| A | KR 10-2007-0067762 A (YOUNGIL CHEMICAL CO., LTD.) 29 June 2007 (2007-06-29)<br>See entire document. | 1-22 |
| A | WO 97-49285 A1 (ZENECA LIMITED) 31 December 1997 (1997-12-31)<br>See entire document. | 1-22 |
| A | WO 2005-053399 A1 (SBM DEVELOPPEMENT) 16 June 2005 (2005-06-16)<br>See entire document. | 1-22 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2023** | **08 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| International application No. |
| --- |
| **PCT/KR2022/018987** |

| Patent document cited in search report | | | Publication date (day/month/year) | Patent family member(s) | | | Publication date (day/month/year) |
| --- | --- | --- | --- | --- | --- | --- | --- |
| KR | 10-0177143 | B1 | 01 April 1999 | EP | 0415688 | A2 | 06 March 1991 |
| | | | | EP | 0415688 | B1 | 23 December 1998 |
| | | | | EP | 0777964 | A1 | 11 June 1997 |
| | | | | EP | 0777964 | B1 | 14 November 2001 |
| | | | | JP | 03-163004 | A | 15 July 1991 |
| | | | | JP | 3188447 | B2 | 16 July 2001 |
| | | | | KR | 10-1991-0004091 | A | 28 March 1991 |
| | | | | US | 5208030 | A | 04 May 1993 |
| | | | | US | 5922337 | A | 13 July 1999 |
| KR | 10-2014-0017518 | A | 11 February 2014 | CN | 103327811 | A | 25 September 2013 |
| | | | | CN | 103327811 | B | 30 September 2015 |
| | | | | JP | 2013-544882 | A | 19 December 2013 |
| | | | | JP | 2016-130247 | A | 21 July 2016 |
| | | | | WO | 2012-077961 | A2 | 14 June 2012 |
| | | | | WO | 2012-077961 | A3 | 04 October 2012 |
| KR | 10-2007-0067762 | A | 29 June 2007 | KR | 10-0768273 | B1 | 18 October 2007 |
| WO | 97-49285 | A1 | 31 December 1997 | CN | 1226134 | A | 18 August 1999 |
| | | | | EP | 0914039 | A1 | 12 May 1999 |
| | | | | JP | 2000-512985 | A | 03 October 2000 |
| | | | | KR | 10-2000-0022072 | A | 25 April 2000 |
| | | | | US | 5716630 | A | 10 February 1998 |
| WO | 2005-053399 | A1 | 16 June 2005 | EP | 1684584 | A1 | 02 August 2006 |
| | | | | FR | 2862187 | A1 | 20 May 2005 |
| | | | | FR | 2862187 | B1 | 24 February 2006 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100994183